# EUROPEAN PATENT APPLICATION

(11) **EP 2 717 213 A1**
(43) Date of publication of application: **09.04.2014**
(21) Application number: 13004287.2
(22) Date of filing: 30.08.2013
(51) Int. Cl.: G06Q 30/02

(54) **Multi-channel marketing attribution analytics**

(30) Priority: 31.08.2012 US 201261695965 P; 15.03.2013 US 201313838355
(71) Applicant: Accenture Global Services Limited, Dublin 4 (IE)
(72) Inventor: Mcgovern, Conor, London, SE4, 1AE (GB)
(74) Representative: Müller-Boré & Partner Patentanwälte PartG mbB

(57) **Abstract**

A marketing analytics system may include a mixed marketing channel modeling module to determine a mixed marketing channel model for a macro level, and an attribution analysis module to determine values for variables associated with behaviors of individuals for a microsegment associated with the macro level. A marketing analytics engine may identify individuals with similar behaviors, needs and preferences, and facilitate targeted product or service offerings to the microsegment.

## Description

### BACKGROUND

Current approaches to marketing analytics are typically performed to maximize profit or sales at an aggregate level making it difficult to understand synergies between activities or to understand the full returns from all media and marketing activities. For example, current approaches may generate a model to predict sales for a single marketing channel, or may generate a mixed model for multiple marketing channels to predict sales. These models may be used to determine investment amounts in a single marketing channel or investment amounts across multiple marketing channels to maximize sales or profits for an entire brand (e.g., Coke) or product category (e.g., carbonated beverages). Furthermore, the models are typically used to predict sales for a large region such as for the entire North East or for an entire country. Thus, existing approaches make it difficult to analyze behavior at lower granularities and to tailor marketing messages and activities at lower granularity level.

### BRIEF DESCRIPTION OF THE DRAWINGS

The embodiments are described in detail in the following description with reference to examples shown in the following figures.

Figure 1 illustrates a marketing analytics system.

Figure 2 illustrates a computer system that may be used for the methods and systems described herein.

Figure 3 illustrates a flow chart of a method for determining and applying marketing drivers to microsegments.

Figure 4 shows a graphic illustration of clustering.

Figures 5 and 6 illustrate clustering analytics and segmentation.

Figure 7 illustrates neural networks that may be used in the marketing analytics system.

Figure 8 illustrates creating a classifier.

Figure 9 illustrates logistic regression that may be used with the clustering.

Figure 10 illustrates a blind matching process.

Figure 11 illustrates a data matching process.

Figure 12 illustrates an architecture.

### DETAILED DESCRIPTION OF EMBODIMENTS

For simplicity and illustrative purposes, the embodiments of the invention are described by referring mainly to examples thereof. Also, numerous specific details are set forth in order to provide a thorough understanding of the embodiments. It will be apparent however, to one of ordinary skill in the art, that the embodiments may be practiced without limitation to one or more of these specific details. In some instances, well known methods and structures have not been described in detail so as not to unnecessarily obscure the description of the embodiments.

According to an embodiment, multi-channel customer attribution analytics utilize data from multiple sources at a micro-segment granularity (e.g., individual, household, set of like households or like individuals) and apply a range of analytics techniques to give a low granularity view on mass and targeted media exposure and marketing return on investment (ROI). For the attribution analysis, in one embodiment, hierarchical and non-hierarchical clustering may be used in tandem to determine clusters for attributes of a microsegment. For example, first an initial set of clusters is determined using hierarchical clustering. Then, number of clusters and cluster centroids determined from the hierarchical clustering are used as inputs to the partitioning (non-hierarchical clustering) which may include K-means clustering. This information may be used to create targeted marketing for each cluster. Also, the system provides a new approach to creating anonymous data sets to protect user privacy. It is technical problem to create an anonymous data set from a plurality of different data sources while still maintaining a relationship between the data and a microsegment. The system implements a technical solution that includes generating multiple cross-references based on information from data sources to generate an anonymous data set that still maintains a relationship between the data and a microsegment.

A marketing analytics system gathers data from a plurality of sources at a macro level and at a microsegment level. In one example, a microsegment is a household or a set of like households comprised of users having similar demographics. A macro level may be a region. The region for the macro level may be much larger than the microsegment but may encompass the microsegment. For example, the microsegment may be a household and the macro level may encompass a region, such as a state or country or countries. The data may be for a plurality of marketing channels, such as an Internet marketing channel, television marketing channel, print marketing channel, etc. The data may include historic sales data and information about the marketing activities performed for the microsegment on the marketing channels. The data is used to generate a model for the macro level, and the model and attribution analysis may be used to determine targeted marketing activities for the microsegment to maximize ROI or to achieve other goals, such as inventory control, improving customer lifetime, etc.

According to an embodiment, the marketing analytics system utilizes the mixed marketing channel modeling and attribution analysis to maximize ROI. The mixed marketing channel modeling may be used to understand and make predictions about marketing effectiveness at the macro level. The attribution analysis may be used to dive deeper and understand media, customer experience and customer behavior at the microsegment level.

Logistic regression may be used to generate the mixed marketing model. Examples of attribution analysis techniques include clustering, and neural networks. Clustering can be used to identify the homogeneous patterns across smaller segments (e.g., households, individuals, etc.) of a macro level that cause distinct behavioral actions, such as purchases. These homogeneous patterns may include reactions to marketing activities provided on different marketing channels. For example, a pattern may include an individual viewing a commercial on TV for a product, visiting the FACEBOOK page for the product, checking if the individual's friends liked the product and then purchased the product. These types of patterns may be detected among individuals or households in a cluster and then these patterns can be applied to individuals or households in similar clusters. Also, the clusters may be determined based on similarity of attributes of the individuals or households.

In one example, each attribute within each cluster is allocated a specific weight to identify its relative importance to the cluster and across clusters. Sequences of logistic regressions isolate and measure the media interactions and impact of media on consumer decisions in a fast and efficient manner, and are relatively easy to interpret. A combination of clustering techniques and modifications of the logistic regression may be performed to provide greater insights into consumer behavior since it enables classification of variables within a group of households with similar profiles. Neural networks may also be employed in the case of lack of historical information and absence of a theoretical framework around the causal relationships of the variables.

For example, the mixed modeling may be used to determine an investment amount in each marketing channel to maximize ROI. The investment amounts may be used as budgets for each marketing channel. Attribution analysis may be used to identify specific marketing activities to perform for each marketing channel to maximize ROI. For example, attribution analysis may be used to determine that a particular household responded to a sequence of marketing activities. That sequence may be targeted to like households and additional marketing activities may be performed to enhance probabilities of generating sales, such as performing additional targeting online marketing at the time the sequence of activities are performed.

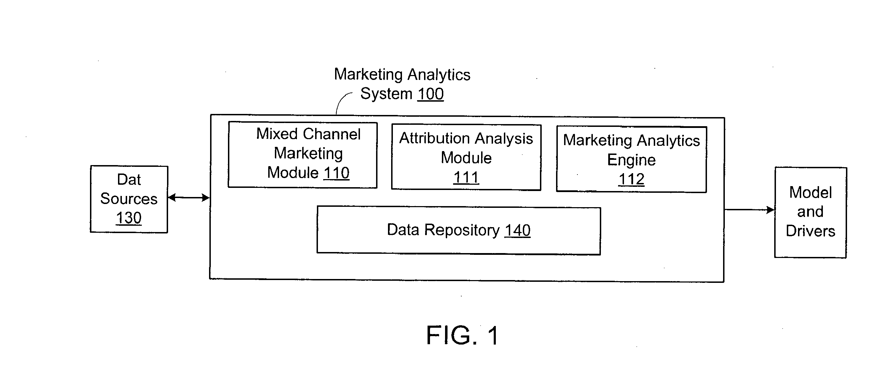

Figure 1 illustrates a high-level diagram of a marketing analytics system 100 according to an embodiment. The system 100 includes a mixed marketing channel modeling module 110 to determine a mixed marketing channel model at a DMA (direct market area) level. The DMA level (e.g., a macro level) covers an area much larger than the microsegment, such as zip code, region, a demographic group, etc. The mixed model incorporates analysis of multi-channel marketing effectiveness at the DMA level. The mixed model may be determined from logistic regression or other modeling techniques. The mixed modeling is performed on data received from the data sources 130, which may include web analytics data, television marketing data or any data related to marketing activities for different marketing channels and consumer behavior. The data repository 140 may store data received from the data sources 130. The data may be anonymous to preserve privacy. An attribution analysis module 111 determines values for variables associated with behaviors and needs of consumers for a microsegment based on information in the mixed model and the data from the data sources 130. In one example, the values for variables are the values for attributes of individuals or households put into a cluster, such as their demographics, preferences, etc. The values may describe marketing activities that the individuals or households responded to. Attribution analysis techniques are described in further detail below. A marketing analytics engine 112 applies the mixed marketing channel model and the attribution analysis to estimate consumers with similar behaviors, needs and preferences, and facilitates targeted product or service offerings to the microsegment to maximize return on investment. The marketing analytics engine 112 may determine a model for the microsegment from the mixed modeling and the attribution analysis. From the model, drivers may be determined that maximize ROI. These drivers may be applied to other similar microsegments.

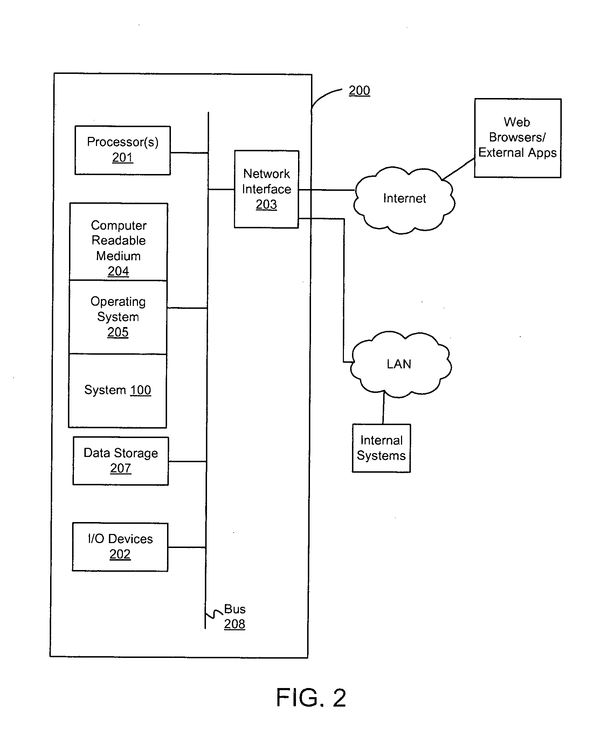

Figure 2 illustrates a computer system 200 that may be used to implement the system 100. The illustration of the computer system 200 is a generalized illustration and that the computer system 200 may include additional components and that some of the components described may be removed and/or modified. The computer system 200 may be a server. The system 100 may be implemented in a distributed computing system, such as a cloud computing system, on a plurality of servers.

The computer system 200 includes processor(s) 201, such as a central processing unit, ASIC or other type of processing circuit, input/output devices 202, such as a display, mouse keyboard, etc., a network interface 203, such as a Local Area Network (LAN), a wireless 802.11x LAN, a 3G or 4G mobile WAN or a WiMax WAN, and a computer-readable medium 204. Each of these components may be operatively coupled to a bus 208. The computer readable medium 204 may be any suitable medium which participates in providing instructions to the processor(s) 201 for execution. For example, the computer readable medium 204 may be non-transitory or non-volatile medium, such as a magnetic disk or solid-state non-volatile memory or volatile medium such as RAM. The instructions stored on the computer readable medium 204 may include machine readable instructions executed by the processor(s) 201 to perform the methods and functions of the system 100.

The system 100 may be implemented as software stored on a non-transitory computer readable medium and executed by one or more processors. For example, during runtime, the computer readable medium 204 may store an operating system 205, such as MAC OS, MS WINDOWS, UNIX, or LINUX, and code for the system 100. The operating system 205 may be multi-user, multiprocessing, multitasking, multithreading, real-time and the like.

The computer system 200 may include a data storage 207, which may include non-volatile data storage. The data storage 207 stores any data used by the system 100. The data storage 207 may be used for the data repository 140 shown in figure 1.

The network interface 203 connects the computer system 200 to internal systems for example, via a LAN. Also, the network interface 203 may connect the computer system 200 to the Internet. For example, the computer system 200 may connect to web browsers and other external applications via the network interface 203 and the Internet.

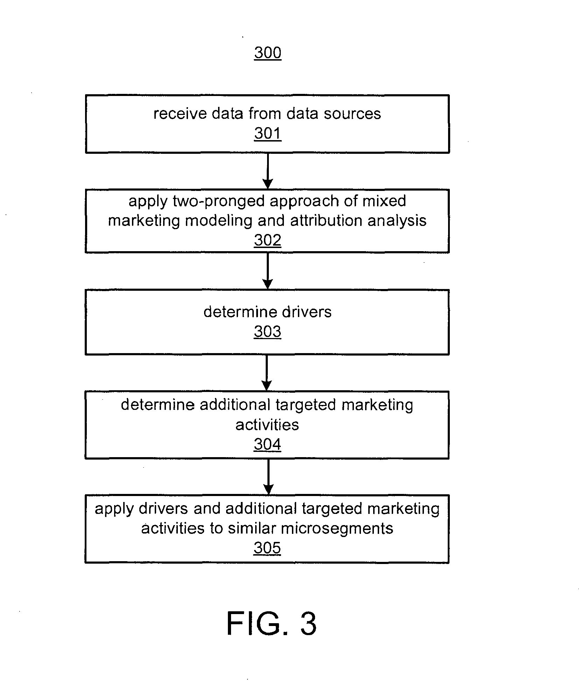

Figure 3 illustrates a method 300 that may be performed by the system 100 or other systems.

At 301, data is collected and stored from a plurality of marketing channel sources, e.g., the data sources 130 shown in figure 1, that describe marketing activities on the different marketing channels that were for a microsegment and a macro level. The data may include consumer behavior and other information. For example, assume the microsegment is a particular household. The data may include mass media exposure for the household, such as data identifying television programs and advertising viewed by the household, direct marketing treatments, such as email sent to the members of the household and direct mailings sent to the household, social media exposure for the members of the household, etc. The data may also include behavior of the members of the household that is captured in response to exposure of advertisements or other information provided on one or more of the marketing channels. The behavior may identify online behavior, such as web pages visited, re-tweets, indicating a product as being liked, posting of comments (positive or negative), purchases, etc. The data may be captured for the macro level (e.g., DMA level) as well as the microsegment.

At 302, a two-prong approach is performed. For example, a mixed model incorporating analysis of multi-channel marketing effectiveness at the DMA level is determined for example by the mixed channel marketing module 110. Also, attribution analysis is performed for example by the attribution analysis module 111 to dive deeper and understand media, customer experience and customer behavior. The attribution analysis may include applying clustering (e.g., k-means or hierarchical, logistic regression, combination of logistic regression and clustering, or neural networks) to determine relationships between marketing activities, customer experience and customer behavior at the microsegment level.

Clustering may identify the homogeneous patterns across households leading to distinct behavioral segments. The homogeneous patterns may comprise similar responses to a sequence of marketing activities across the households. Examples of clustering are provided in further detail below. Each attribute within each cluster, for example, is allocated a specific weight to identify its relative importance to the cluster and across clusters.

Sequences of logistic regressions isolate and measure the media interactions and impact of media on consumer decisions in a fast and efficient manner, and are relatively easy to interpret.

A combination of clustering techniques and modifications of the logistic regression may be used to provide greater insights since it enables classification of variables within a group of households with similar profiles.

Neural networks may be employed in the case of lack of historical information and absence of a theoretical framework around the causal relationships of the variables.

The attribution analysis provides a more precise measurement of media, customer experience and customer behavior as opposed to modeling performed for a much larger target, such as a region or country.

At 303, drivers are determined from the model and the attribution analysis to improve the performance objective based on the model and relationships. For example, drivers are identified for maximizing sales or upgrades, which may include specific advertising or other marketing activities. In one example, the drivers may include the marketing activities and attributes of the individuals favorably responding (e.g., making purchases) to the marketing activities.

At 304, additional targeted marketing activities to improve the performance objective are determined. In one example, an additional marketing activity may include modifying a website to target a particular demographic that was determined by the modeling to respond to television marketing exposure and social media marketing at a particular time.

At 305, the drivers and additional marketing activities are applied to the microsegment and other microsegments that have similar attributes.

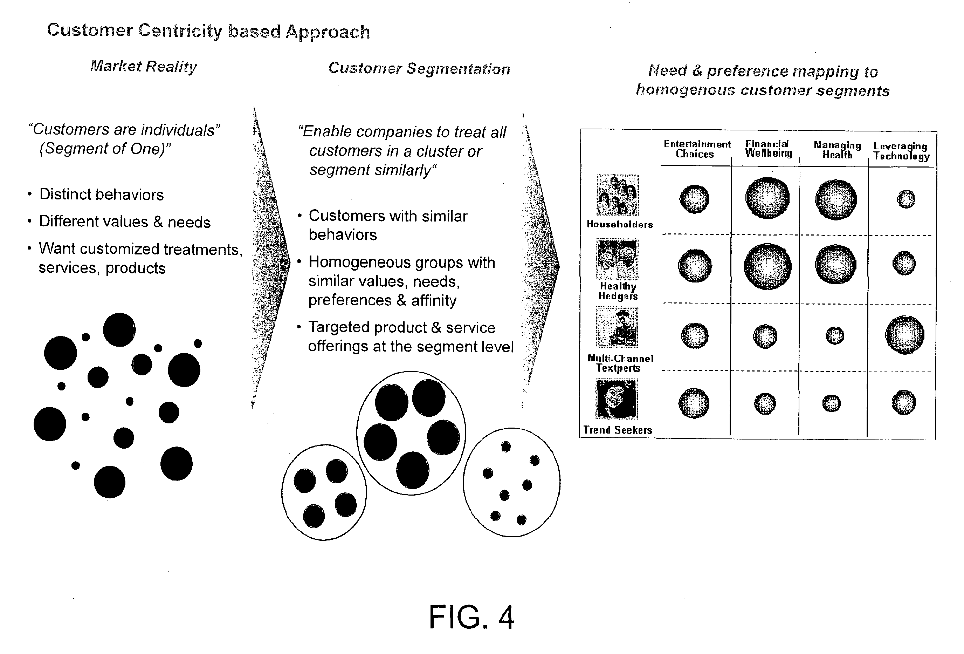

Additional details regarding the attribution analysis are now described. Clustering identifies homogeneous patterns across households leading to distinct behavioral segments. Each attribute within each cluster may be allocated a specific weight to identify its relative importance to the cluster and across clusters. The attributes may describe the microsegment and may be included in a profile for the microsegment. Examples of attributes include age, sex, and other demographics, product preferences, likes, dislikes, etc. Clustering is an analytical approach which classifies microsegments (e.g., households) into groups that have similar traits & profiles. Once drivers are identified for a household in a cluster, the drivers may be applied to other households in the cluster to maximize ROI. Figure 4 shows a graphic illustrating clustering and how it may be applied. For example, attributes of individuals or households are determined. The attributes may be related to distinct behaviors, different values and needs, and needs, like, dislikes for products, which may include goods or services. The individuals or households are clustered based on their attributes to determine homogeneous groups with similar values, needs, preferences, affinities and behaviors. The clusters may be targeted with customized product offerings relevant to each cluster. For example, entertainment choices, financial well-being, health management and use of technology may be determined for each cluster and values may be determined that describe the preferences for entertainment choices, financial well-being, health management and use of technology for each cluster. This information may be used to create targeted marketing for each cluster.

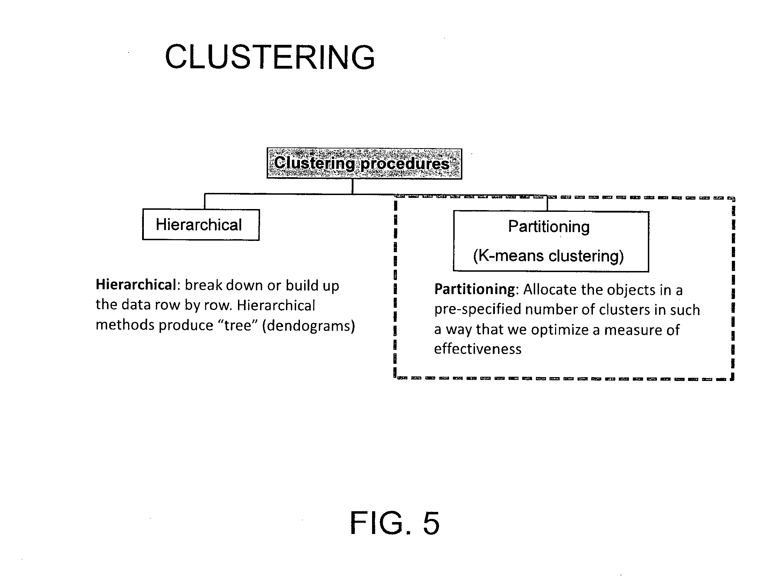

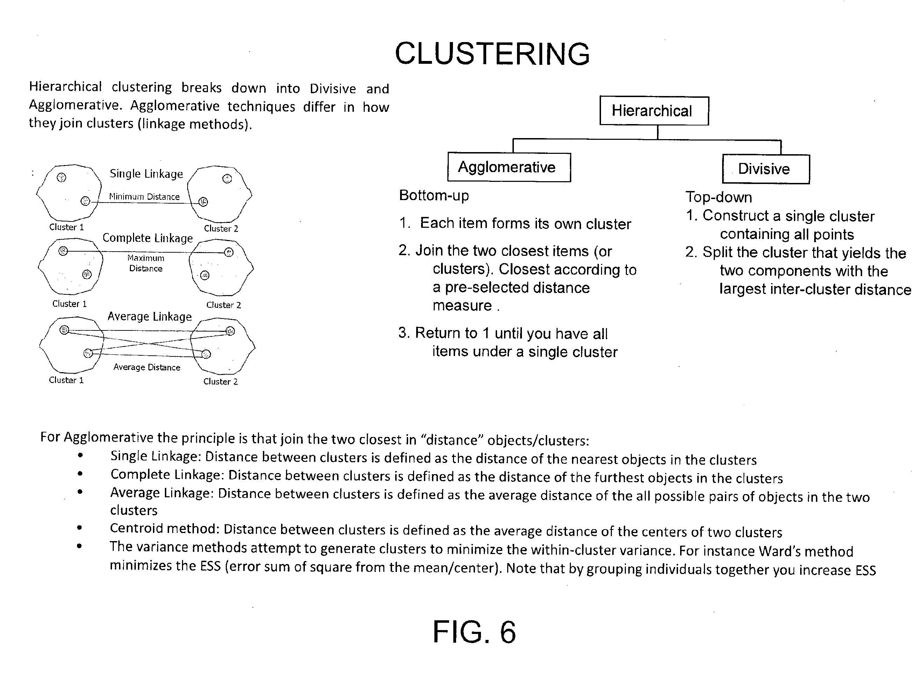

A number of clustering techniques may be applied. K-means clustering allocates objects in a pre-specified number of clusters in such a way that optimizes a measure of effectiveness. Hierarchal clustering includes a top-down approach. Start with one big cluster and recursively split each cluster. The bottom-up agglomerative approach starts with one cluster per data point and iteratively finds two clusters to merge. Clusters are found by finding pairs with maximum similarity. Figures 5 and 6 illustrate examples of clustering analytics and segmentation. Hierarchical and/or non-hierarchical clustering may be used to determine clusters. In one embodiment, hierarchical and non-hierarchical clustering are used in tandem. For example, first an initial set of clusters is determined using hierarchical clustering. Then, number of clusters and cluster centroids determined from the hierarchical clustering are used as inputs to the partitioning (non-hierarchical clustering) which may include K-means clustering. For example, the number of clusters are used as the initial seeds and the selection of the value of K for the K-means clustering.

Figure 6 shows examples of different types of hierarchical clustering which may include agglomerative or divisive. For example, agglomerative may include a bottom-up approach whereby each item forms its own cluster, two closest items (e.g., households or individuals) are joined and repeat until you have a single cluster. Divisive may have a top-down approach where one cluster has all the items and then the cluster is split and repeated.

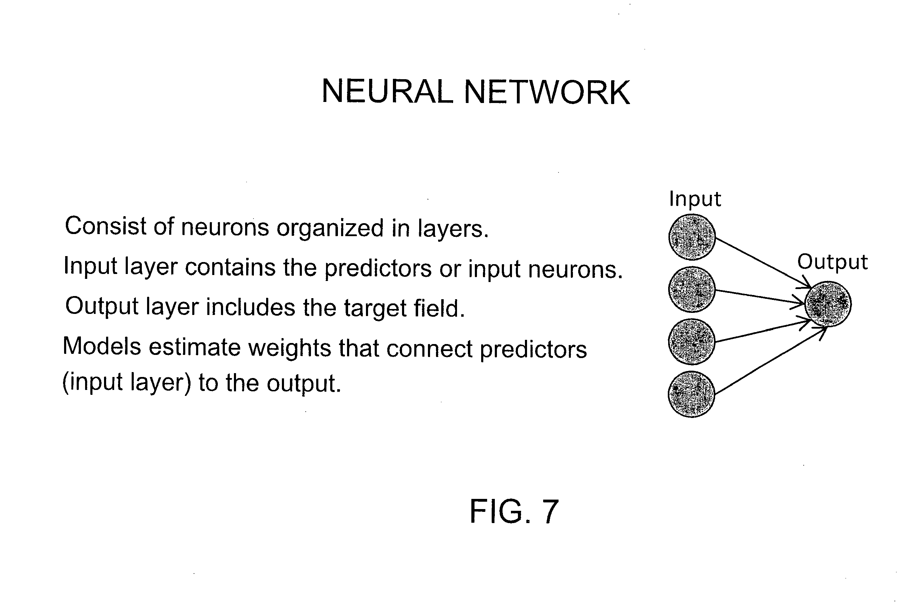

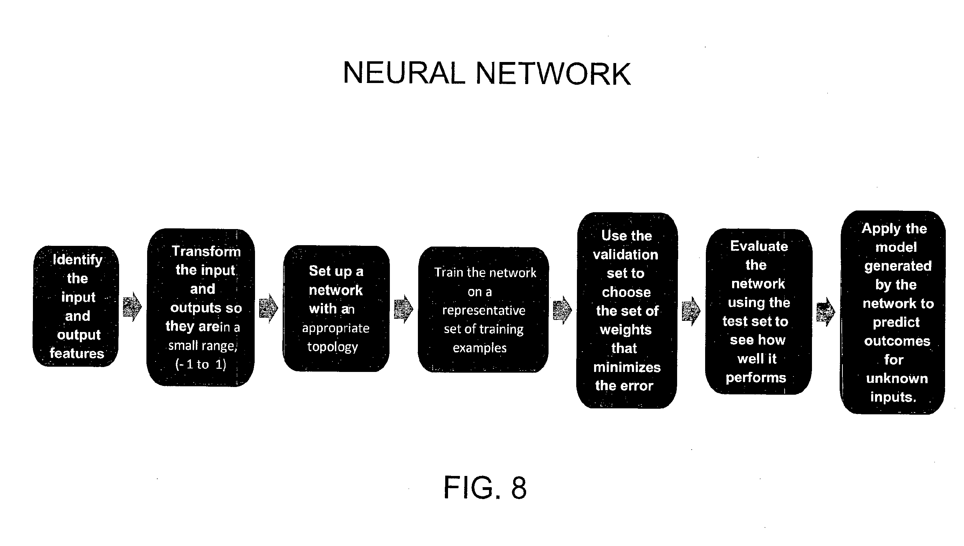

Neural networks may be generated for attribution analysis. Figure 7 generally describes neural networks. Figure 8 describes steps for creating a classifier according to an embodiment. For example, input and output features are identified and transformed to a range. A neural network is created and trained. A validation data set is used to set weights for minimizing error. The neural network is evaluated with a test data set and then the neural network may be applied to determine predictions.

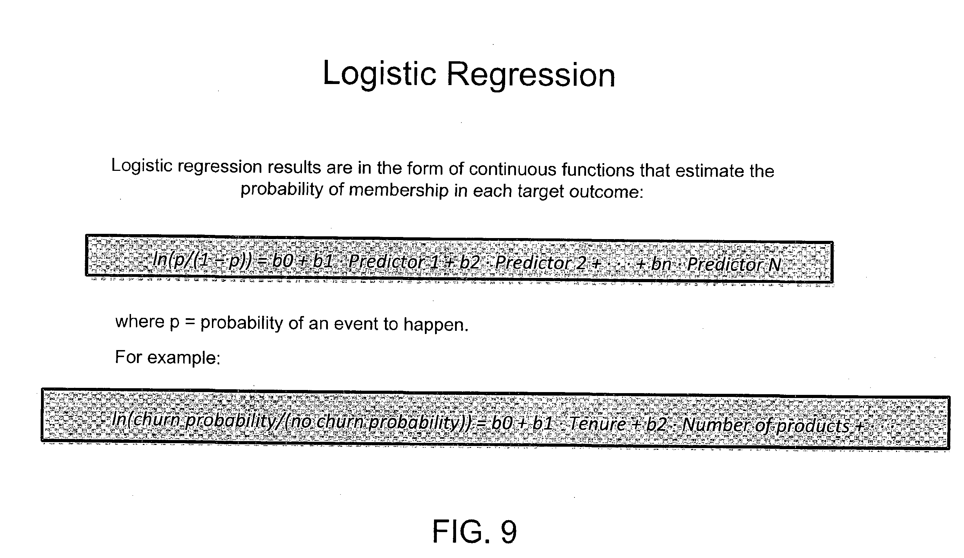

Logistic regression may also be used for the attribution analysis. Logistic regression is described in figure 9. Logistic regression may be used in combination with clustering.

The data sources 130 shown in figure 1 may include general information about marketing activities, such as audience viewership for television, regional purchase behavior, etc. However, some data may be particular to a household or individual, such as data for individual or household impressions, purchases, etc. This data may be made anonymous to protect consumer privacy. A blind matching process may be used to address privacy issues while enriching the data.

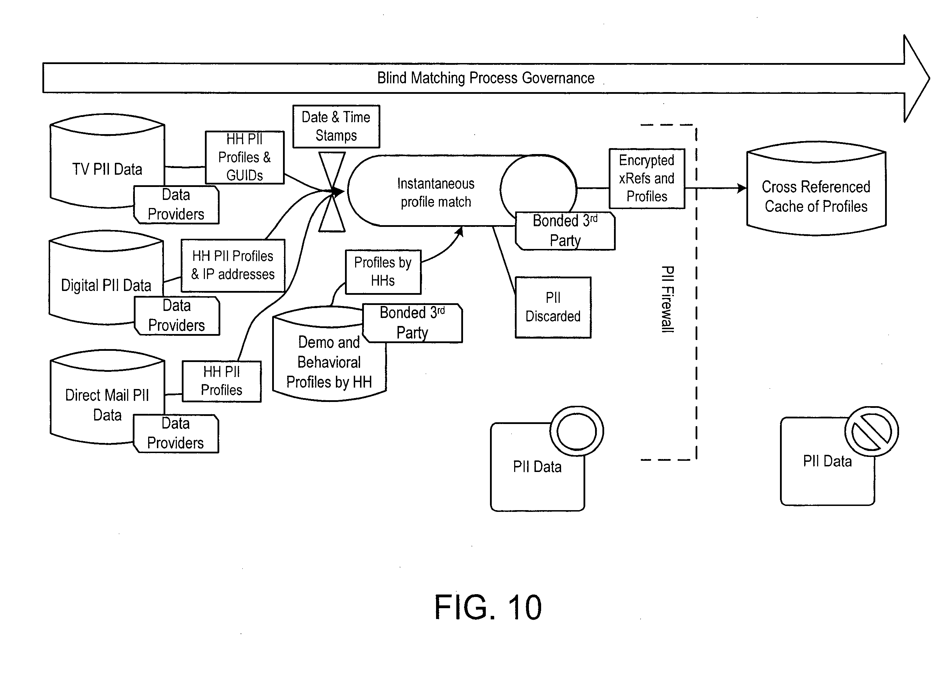

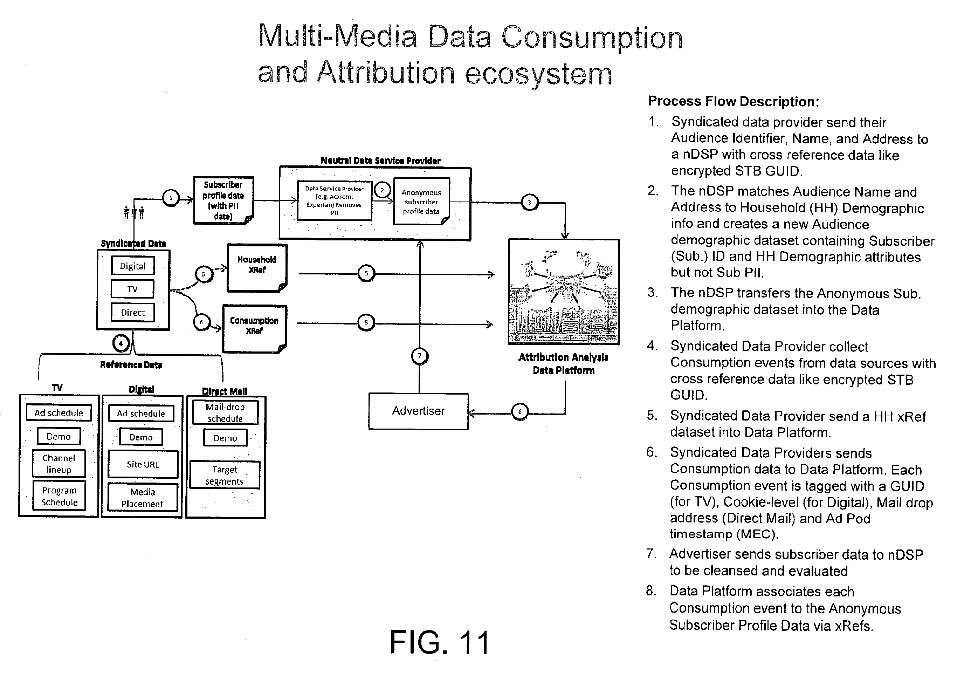

Figure 10 illustrates a blind matching process. Figure 11 illustrates a data consumption process that can make data anonymous. For example, Syndicated data provider sends their Audience Identifier, Name, and Address to an nDSP (neutral data service provider) with cross reference data like encrypted STB GUID (set top box, graphical user ID). The nDSP matches Audience Name and Address to Household (HH) Demographic info and creates a new Audience demographic dataset containing Subscriber (Sub.) ID and HH Demographic attributes but not Sub Pll (e.g., subscriber personal information).

The nDSP transfers the anonymous subject demographic dataset into the data platform. A Syndicated Data Provider (SDP) collects consumption events from data sources with cross reference data like encrypted STB GUID. The SDP sends a HH xRef dataset (e.g., household cross-reference data) into the data platform. The SDP sends consumption data for the consumption events to the data platform. Each consumption event is tagged with a GUID (for TV), Cookie-level (for Digital), Mail drop address (Direct Mail) and Ad Pod timestamp (MEC).

An advertiser sends subscriber data to nDSP to be cleansed and evaluated. The data platform associates each consumption event to the anonymous subscriber profile data via xRefs.

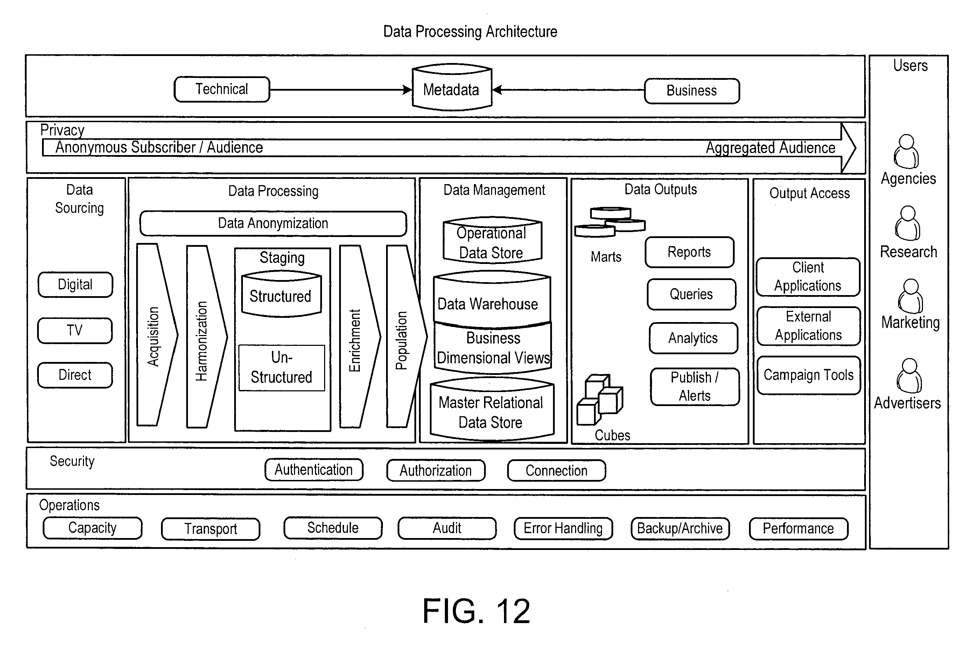

Figure 12 illustrates an example of an architecture that may be implemented for the system 100.

## Claims

1. A marketing analytics system comprising:
a mixed marketing channel modeling module to determine a mixed marketing channel model for a macro level;
an attribution analysis module to determine values for variables associated with behaviors of consumers for a microsegment associated with the macro level; and
a marketing analytics engine to apply the mixed marketing channel model and the values for the variables to estimate consumers with similar behaviors, needs and preferences, and facilitate targeted product or service offerings to the microsegment to maximize return on investment.

2. The marketing analytics system of claim 1, wherein the attribution analysis module is to:
determine clusters of smaller segments within the macro level according to attributes, and
determine the values for the variables associated with behaviors of the consumers for the microsegment based on the attributes for one of the determined clusters.

3. The marketing analytics system of claim 2, wherein the attribution analysis module is to determine the clusters by applying at least one of a hierarchical clustering procedure and a non-hierarchical clustering procedure.

4. The marketing analytics system of claim 3,
wherein the attribution analysis module is to determine a first set of clusters by applying the hierarchical clustering procedure and use the number of clusters and cluster centroids determined from the hierarchical clustering procedure as inputs to the non-hierarchical clustering procedure;
wherein the hierarchical clustering procedure may include at least one of agglomerative and divisive clustering; and
wherein the non-hierarchical clustering procedure may include K-means clustering.

5. The marketing analytics system of any one of the preceding claims, wherein the attribution analysis module is to apply a neural network to determine the values for the variables associated with behaviors of consumers for the microsegment.

6. The marketing analytics system of any one of claims 2 to 5, wherein the attribution analysis module is to identify homogeneous patterns for the microsegment from the cluster, wherein the homogeneous patterns comprise actions of the microsegment responsive to marketing activities applied to the microsegment on a plurality of marketing channels.

7. The marketing analytics system of claim any one of the preceding claims, wherein the variables comprise attributes of smaller segments of the macro level and to determine the values for variables, the attribution analysis module is to determine clusters of the smaller segments according to the attributes and each attribute within each cluster is allocated a specific weight to identify its relative importance to the cluster and across the clusters.

8. The marketing analytics system of claim any one of the preceding claims,
wherein the mixed marketing channel modeling module is to determine the mixed marketing channel model from data associated with a plurality of marketing channels, wherein the plurality of marketing channels include an Internet marketing channel, a television marketing channel, and a print marketing channel, and the data may include historic sales data and information for marketing activities performed on the plurality of marketing channels for the microsegment and for the macro level; and
wherein the data may be made anonymous and a blind matching process may be executed to anonymously match data with an individual or household.

9. The marketing analytics system of any one of the preceding claims, wherein the marketing analytics engine to apply the mixed marketing channel model and the values for the variables to determine drivers for the microsegment that are applicable to similar microsegments to facilitate targeted product offerings to the similar microsegments to maximize the return on investment.

10. A method for marketing analytics comprising:
determining a mixed marketing channel model for a macro level;
determining, by a processor, values for variables associated with behaviors of consumers for a microsegment associated with the macro level; and
estimating individuals with similar behaviors, needs and preferences based on the mixed marketing channel model and the values for the variables to facilitate targeted product or service offerings to the microsegment.

11. The method of claim 10, comprising:
determining clusters of smaller segments within the macro level according to attributes, and
the determining of the values for the variables includes determining the values based on the attributes for one of the determined clusters.

12. The method of claim 11,
wherein the determining of the clusters comprises determining a first set of clusters by applying the hierarchical clustering procedure and using a number of clusters and cluster centroids determined from the hierarchical clustering procedure as inputs to a non-hierarchical clustering procedure;
wherein the hierarchical clustering procedure may include at least one of agglomerative and divisive clustering, and
wherein the non-hierarchical clustering procedure may include K-means clustering.

13. The method of claim 11 or 12, comprising:
identifying homogeneous patterns for the microsegment from the cluster, wherein the homogeneous patterns comprise actions of the microsegment responsive to marketing activities applied to the microsegment on a plurality of marketing channels.

14. The method of claim any one of claims 10 to 13,
wherein the determining of the mixed marketing channel model comprises determining the model from data associated with a plurality of marketing channels, wherein the plurality of marketing channels include an Internet marketing channel, a television marketing channel, and a print marketing channel, and the data may include historic sales data and information for marketing activities performed on the plurality of marketing channels for the microsegment and for the macro level;
wherein the method optionally comprises determining drivers for the microsegment from the model and the values, and
wherein the drivers may be applied to similar microsegments to facilitate targeted product offerings to the similar microsegments to maximize the return on investment.

15. A non-transitory computer-readable medium including machine readable instructions executable by a processor to carry out a method according to any one of claims 10 to 14.
